# EUROPÄISCHE PATENTSCHRIFT

(11) **EP 2 793 194 B1**
(45) Veröffentlichungstag und Bekanntmachung des Hinweises auf die Patenterteilung: **15.03.2017**
(21) Anmeldenummer: 13164396.7
(22) Anmeldetag: 19.04.2013
(51) Int. Cl.: G07B 15/00, G07B 15/06

(54) **Verfahren zum Aufladen einer Onboard-Unit mit einem elektronischen Ticket**
Method for charging an onboard unit with an electronic ticket
Procédé de charge d'une unité embarquée avec un ticket électronique

(43) Veröffentlichungstag der Anmeldung: 22.10.2014
(73) Patentinhaber: Kapsch TrafficCom AG, 1120 Wien (AT)
(72) Erfinder: Povolny, Robert, 1190 Wien (AT); Nagy, Oliver, 1190 Wien (AT)
(74) Vertreter: Weiser, Andreas

(56) Entgegenhaltungen:
- EP-A1- 2 306 358
- WO-A1-2005/109348
- WO-A1-2009/082748
- WO-A1-2010/007178
- WO-A2-03/042225
- DE-A1- 10 136 846
- US-A1- 2010 145 776

## Beschreibung

Die vorliegende Erfindung betrifft Verfahren zum Aufladen und Einlösen elektronischer Tickets in einem Verkehrstelematiksystem.

Verkehrstelematiksysteme werden für eine Vielzahl unterschiedlicher Anwendungen eingesetzt, sei es zur elektronischen Identifikation eines Fahrzeugs oder zur Entrichtung von Straßen, Zutritts-, Gebiets- oder City-Maut, zur Entrichtung von Parkgebühren, zur Zutrittskontrolle (z.B. Schrankenanlagen), zur elektronischen Fahrzeugregistrierung (electronic vehicle registration, EVR) usw. usf. Zu diesem Zweck werden häufig Onboard-Units (OBUs) mit einem Kurzreichweiten-Kommunikationsmodul nach dem DSRC-Standard (dedicated short range communication) eingesetzt, um sie auf den lokalen Funkabdeckungsbereich einer sie abfragenden Funkbake lokalisieren zu können.

Elektronische Tickets können dabei in Onboard-Units geladen und dann zur Einlösung bei verschiedensten Arten von Funkbaken verwendet werden, beispielsweise um bei einer Funkbake eine Straßenmaut zu zahlen ("Mautticket"), eine Parkgebühr zu zahlen ("Parkticket"), eine Eintrittsgebühr zu zahlen ("Eintrittsticket"), oder um den Bezug einer Ware oder Dienstleistung zu begleichen, z.B. für einen Wetterdienst, Datendienst, Informations- oder Unterhaltungsdienst od.dgl.

Um die Integrität eines solchen elektronischen Tickets auf dem Übertragungsweg zwischen z.B. einer ticketausstellenden Zentrale, einer tickettransportierenden Onboard-Unit und einer ticketeinlösenden Funkbake zu gewährleisten, werden bei bekannten Verkehrstelematiksystemen derzeit symmetrische Schlüsselpaare verwendet, welche die Kommunikationspartner vor der Kommunikation austauschen müssen. Dies erfordert ein gesichertes Schlüsselverteilungsverfahren, mit entsprechend hohem Zeit-, Organisations- und Kostenaufwand.

Die Schrift WO 2009/082748 A1 beschreibt ein Bezahlsystem in einem Fahrzeug, bei dem eine Onboard-Unit über einen Sendeempfänger mit einem Händler kommuniziert. Um eine Transaktion durchzuführen, erkennt ein Reader der Onboard-Unit z.B. ein Mobiltelefon, welches über eine Internetverbindung auf einen "Online Account" zugreift, woraufhin die Transaktion über den "Online Account" abgewickelt wird und/oder die Onboard-Unit Bezahlinformationen (z.B. Kreditkartennummer) an den Händler schickt. Die Funkkommunikation zwischen Onboard-Unit und Händler bzw. zwischen Onboard-Unit und Mobiltelefon kann z.B. über ein Verschlüsselungssystem mittels privaten und öffentlichen Schlüsseln gesichert sein.

Die WO 2005/109348 A1 beschreibt ein Verfahren zur Bestellung eines Codes zur Anzeige eines gültigen Parkaufenthalts, wobei ein Mobilfunkgerät den Code von einer Zentrale anfordert und den von der Zentrale erhaltenen Code an ein E-Tag zur Anzeige im Fahrzeug sendet. Dabei wird wiederum die Kommunikation zwischen Zentrale und Mobilfunkgerät einerseits und zwischen Mobilfunkgerät und E-Tag andererseits nach bekannten Verfahren verschlüsselt.

Die Schrift WO 03/042225 A2 zeigt eine Verschlüsselung von Tickets mit Hilfe von öffentlichen und privaten Schlüsseln: Die Tickets werden von einer Zentrale mit einem öffentlichen Schlüssel z.B. eines Mobiltelefons verschlüsselt, woraufhin das verschlüsselte Ticket dem Mobiltelefon übersandt wird. Das Mobiltelefon kann in weiterer Folge das Ticket mit seinem privaten Schlüssel entschlüsseln und bei einem Einlösesystem einlösen.

Die Erfindung setzt sich zum Ziel, die Nachteile des geschilderten Standes der Technik zu überwinden und ein verbessertes Ticketausstellungs- und -einlöseverfahren für elektronische Tickets in einem Verkehrstelematiksystem zu schaffen.

Dieses Ziel wird in einem ersten Aspekt der Erfindung mit einem Verfahren der einleitend genannten Art mit den Merkmalen des Anspruchs 1 erreicht.

Unter DSRC und einer DSRC-Schnittstelle wird in der vorliegenden Beschreibung eine Kurzreichweiten-Kommunikation über eine Funkreichweite von maximal einigen m, einigen zehn m oder einigen hundert m verstanden, wie es beispielsweise durch die Standards DSRC (dedicated short range communication), CEN-DSRC, UNI-DSRC, IEEE 802.11p bzw. WAVE (wireless access for vehicular environments) bzw. ITS-G5 einschließlich WLAN und Wifi^{®}, Bluetooth^{®} oder auch aktive und passive RFID-Technologien (radio frequency identification) implementiert wird.

Die Erfindung beruht auf der Verwendung asymmetrischer Verschlüsselungsverfahren ("public/private key encryption") und einer gesonderten, für diese Verschlüsselung geeigneten Schnittstelle der Onboard-Unit, über welche das Ticket in die Onboard-Unit eingespielt (geladen) werden kann. Die asymmetrische Verschlüsselung erübrigt die Notwendigkeit eines gesicherten Schlüsselverteilungsverfahrens, wie es bei symmetrischen Schlüsseln erforderlich ist. So kann jede Onboard-Unit mit ihrem eigenen Schlüsselpaar aus öffentlichen und privaten Onboard-Unit-Schlüssel ausgestattet werden, beispielsweise bei der Fertigung, ohne dass die privaten Onboard-Unit-Schlüssel in Betrieb den anderen Kommunikationspartnern, z.B. dem Ticketaussteller bekannt sein müssen.

Die Verwendung eines Mobiltelefons, insbesondere eines NFC-fähigen Mobiltelefons und einer NFC-Schnittstelle zwischen Mobiltelefon und DSRC-Onboard-Unit, erleichtert dabei die Handhabung und den gesicherten, verschlüsselten Tickettransfer von der Zentrale zur Onboard-Unit mit Hilfe eines Mobilfunknetzes (public land mobile network, PLMN) einerseits und einer drahtlosen bzw. NFC-Funkschnittstelle anderseits.

Besonders günstig ist es daher, wenn die zweite Schnittstelle eine drahtlose Schnittstelle ist, bevorzugt eine NFC-Schnittstelle, was die Handhabung des Aufladens einer Onboard-Unit mit einem elektronischen Ticket wesentlich vereinfacht. NFC (near field communication) ist eine Funkkommunikationstechnologie über extrem kurze Funkreichweiten von maximal einigen cm oder einigen zehn cm und erfordert daher eine enge Nähe zur Onboard-Unit, um die Kommunikation aufzubauen und das Ticket in die Onboard-Unit einzuspielen, was dem Benutzer Sicherheit gibt, genau diese Onboard-Unit anzusprechen.

Eine bevorzugte Ausführungsform der Erfindung zeichnet sich dadurch aus, dass die Funkbake mit einem öffentlichen und einem privaten elektronischen Schlüssel der Funkbake oder einer Zentrale des Verkehrstelematiksystems ausgestattet wird, und dass in der Onboard-Unit das entschlüsselte Ticket oder das daraus abgeleitete Ticket vor dem Senden an die Funkbake mit dem öffentlichen Funkbaken- oder Zentralen-Schlüssel neu-verschlüsselt wird. Bevorzugt wird anschließend in der Funkbake das Ticket oder abgeleitete Ticket mit dem privaten Funkbaken- oder Zentralen-Schlüssel entschlüsselt.

Diese Ausführungsform beruht auf einer vertrauenswürdigen ("trusted") Onboard-Unit, in der ein Schlüsselwechsel von einer ersten Verschlüsselung zwischen ticketausstellender Zentrale und tickettransportierender Onboard-Unit einerseits auf eine zweite Verschlüsselung zwischen tickettransportierender Onboard-Unit und ticketeinlösender Funkbake anderseits erfolgt. Dadurch brauchen Ticketaussteller (z.B. Zentrale) und Ticketeinlöser (Funkbake) voneinander keine Kenntnis privater Schlüssel zu haben, was die Handhabung und Schlüsselverteilung wesentlich erleichtert.

In einem weiteren Aspekt umfasst das erfindungsgemäße Verfahren auch das Ausstellen des Tickets in einem mit einem öffentlichen und einem privaten elektronischen Schlüssel ausgestatten Zentrale des Verkehrstelematiksystems, und zwar mit dem Schritt:
Signieren des Tickets mit dem privaten Zentralen-Schlüssel.

Bevorzugt wird in der Onboard-Unit das Ticket mit Hilfe des öffentlichen Zentralen-Schlüssels validiert und nur dann, wenn es valid ist, das Ticket oder daraus abgeleitete Ticket an die Funkbake zur Einlösung gesandt. Dadurch kann in der vertrauenswürdigen (trusted) Umgebung der Onboard-Unit nicht nur der Wechsel der Verschlüsselung, sondern auch eine zusätzliche Sicherheitsüberprüfung der Validität des Tickets durchgeführt werden, falls gewünscht.

Alternativ oder zusätzlich kann auch in der Funkbake das Ticket oder daraus abgeleitete Ticket mit Hilfe des öffentlichen Zentralen-Schlüssels validiert und nur dann, wenn es valid ist, eingelöst werden.

Der öffentliche Funkbaken- bzw. Zentralen-Schlüssel (je nachdem, welcher dieser Schlüssel erforderlich ist) kann beispielsweise bei der Fertigung in die Onboard-Unit eingespeichert werden. Alternativ und bevorzugt kann dies auch "on the fly" erfolgen, d.h. bevorzugt wird der öffentliche Funkbaken- oder Zentralen-Schlüssel von der Funkbake über die DSRC-Schnittstelle an die Onboard-Unit gesandt.

Der öffentliche Zentral-Schlüssel kann aber auch jeweils mit dem Ticket bzw. abgeleiteten Ticket mitgesandt werden.

Gemäß einem weiteren bevorzugten Merkmal der Erfindung wird in der Zentrale das Ticket mit einer eindeutigen Kennung versehen und in der Onboard-Unit wird überprüft, ob die Kennung eines empfangenen Tickets in einer Liste gespeicherter Kennungen enthalten ist, und nur dann, wenn sie nicht enthalten ist, wird das Ticket oder daraus abgeleitete Ticket zur Einlösung an die Funkbake gesandt.

Damit ist sichergestellt, dass keine Malversationen beim Aufladevorgang erfolgen können: Ein von der Zentrale ausgestelltes und in die Onboard-Unit eingespieltes elektronisches Ticket hat eine eindeutige Kennung, welche bei jedem Aufladevorgang "verbraucht" ist, da es nunmehr in der Liste der Onboard-Unit gespeichert und bei einem nächsten Aufladevorgang nicht mehr gültig ist.

Das elektronische Ticket kann in der Onboard-Unit aufbewahrt, d.h. von dieser transportiert und dann später in dieser Form bei der Funkbake eingelöst werden. Alternativ kann das Ticket in der Onboard-Unit in eine elektronische Geldbörse der Onboard-Unit eingebracht und dann optional daraus das abgeleitete Ticket abgeleitet werden. Das abgeleitete Ticket hat beispielsweise einen Bruchteil oder ein Vielfaches des Geldwertes des ursprünglichen elektronischen Tickets: Aus einem in die Onboard-Unit geladenen elektronischen Ticket können über die elektronische Geldbörse mehrere "kleinere" abgeleitete Tickets zur Einlösung bei Funkbaken erzeugt werden, oder mehrere in die elektronische Geldbörse geladene elektronische Tickets können gemeinsam "größeres" abgeleitetes Ticket bilden. Die elektronische Geldbörse mit dem bzw. den darin enthaltenen elektronischen Ticket (s) stellt somit ein "Guthaben" dar, von dem über die DSRC-Schnittstelle bei Funkbaken mit Hilfe der daraus abgeleitenden Tickets "bezahlt" werden kann.

Die genannte eindeutige Kennung des Tickets kann eine Transaktionskennung sein oder im einfachsten Fall auch lediglich ein Zeitstempel.

Die Erfindung wird nachstehend anhand von in den beigeschlossenen Zeichnungen dargestellten Ausführungsbeispielen näher erläutert. In den Zeichnungen zeigt:
Fig. 1 eine erste Ausführungsform des erfindungsgemäßen Verfahrens anhand von Signalflüssen zwischen den daran beteiligten Komponenten;
Fig. 2 eine zweite Ausführungsform des erfindungsgemäßen Verfahrens in gleicher Darstellungsweise wie in Fig. 1; und
Fig. 3 eine dritte Ausführungsform des erfindungsgemäßen Verfahrens in gleicher Darstellungsweise wie in Fig. 1.

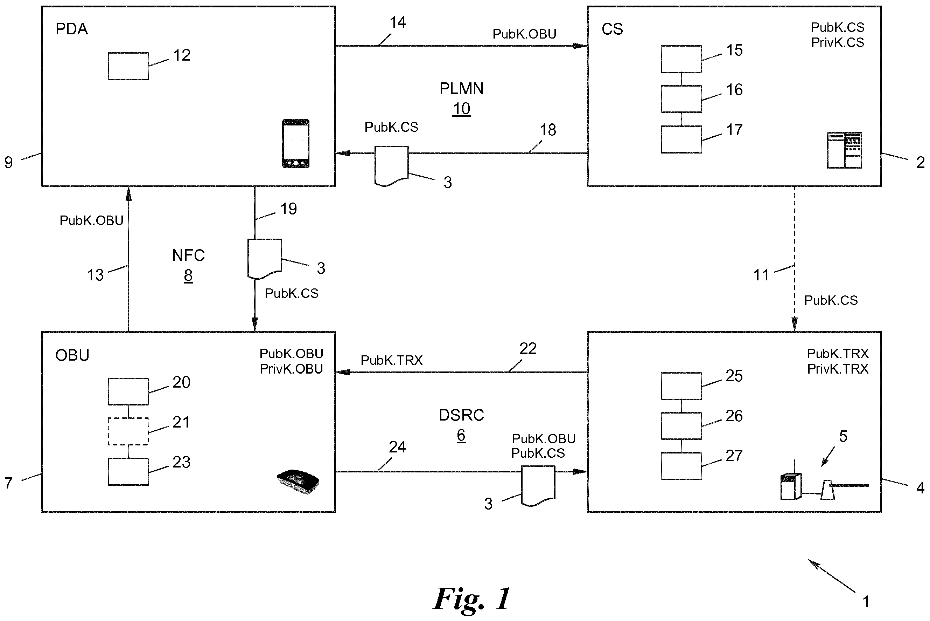

Fig. 1 zeigt ein Verkehrstelematiksystem 1, von dem eine Zentrale 2 zur Ausstellung elektronischer Tickets und - stellvertretend für eine Vielzahl von Funkbaken des Systems 1 - eine Funkbake 4 zur Einlösung eines solchen elektronischen Tickets dargestellt sind. Die Zentrale 2 kann beispielsweise ein Zentralrechner eines Straßenmautsystems, Parkgebührensystems, Kommunikationssystems od.dgl. sein.

Das elektronische Ticket 3 ist eine Datei, die einen realen Wert repräsentiert, beispielsweise zum Bezug einer Dienstleistung berechtigt, wie dem Eintritt zu einem Gebiet oder Gebäude ("Eintrittsticket"), dem Verwenden eines Parkplatzes ("Parkticket"), der Benützung eines Straßenabschnitts oder Gebiets ("Mautticket"), oder allgemein dem Bezug einer Ware oder Dienstleistung ("elektronisches Geld").

Die Funkbake 4 ist eine elektronische Anlage, bei welcher das elektronische Ticket 3 eingelöst werden kann, um zum Eintritt, Parken, Straßenbenützung oder Waren- oder Dienstleistungsbezug zu berechtigen. Beispielsweise ist die Funkbake 4 an einer Straße aufgestellt (road side entity, RSE), um die Benützung ihres Straßenabschnitts durch Einlösung eines elektronischen Tickets 3 zu vergebühren. Alternativ ist die Funkbake 4 ein Parkautomat, bei welchem ein elektronisches Ticket 3 eingelöst werden, um für eine Parkplatz zu bezahlen. Oder die Funkbake 4 ist, wie sinnbildlich bei 5 dargestellt - Teil einer Schrankenanlage, welche bei Einlösen eines elektronischen Tickets 3 einen Eintrittsschranken freigibt, usw. usf.

Die Funkbake 4 ist nach dem Standard DSRC (dedicated short range communication) ausgeführt und dazu ausgebildet, DSRC-Funkkommunikationen über eine DSRC-Funkschnittstelle 6 mit DSRC-Onboard-Units (OBUs) 7 abzuwickeln. Eine solche OBU 7 wird beispielsweise von einem Fahrzeug (nicht dargestellt) mitgeführt, z.B. an der Innenseite der Windschutzscheibe angebracht, kann aber gegebenenfalls auch vom Benutzer getragen werden.

Unter DSRC und einer DSRC-Schnittstelle wird in der vorliegenden Beschreibung eine Kurzreichweiten-Kommunikation über eine Funkreichweite von maximal einigen m, einigen zehn m oder einigen hundert m verstanden, wie es beispielsweise durch die Standards DSRC (dedicated short range communication), CEN-DSRC, UNI-DSRC, IEEE 802.11p bzw. WAVE (wireless access for vehicular environments) bzw. ITS-G5 einschließlich WLAN und Wifi^{®}, Bluetooth^{®} oder auch aktive und passive RFID-Technologien (radio frequency identification) implementiert wird.

Die DSRC-OBU 7 ist zusätzlich zu ihrer DSRC-Schnittstelle 6 mit einer weiteren Schnittstelle 8, bevorzugt einer Funkschnittstelle nach dem Standard NFC (near field communication), ausgestattet, über welche sie Kommunikationen mit einem (dazu bevorzugt NFC-fähigen) Mobiltelefon 9 abwickeln kann. Das Mobiltelefon 9 kann seinerseits über ein Mobilfunknetz (public land mobile network, PLMN) 10 und gegebenenfalls weitere (nicht dargestellte) Datennetze, z.B. das Internet, mit der Zentrale 2 kommunizieren. Alternativ ist die Schnittstelle 8 auch durch WLAN, Bluetooth oder auch drahtgebundene Kommunikation (z.B. USB, SD-Speicherkarten od.dgl.) realisierbar.

Unter den Begriff "Mobiltelefon" 9 fällt hier jedwede Art von Kommunikationsgerät, das in einem Mobilfunknetz 10 kommunizieren kann und zusätzlich mit einer NFC-Schnittstelle 9 ausgestattet ist, beispielsweise ein Funktelefon, Smartphone, Notebook- oder Tablet-PC, Personal Digital Assistant (PDA) usw. Die Funkreichweite der NFC-Schnittstelle 8 ist ausschließlich für den Nahbereich ausgelegt, d.h. auf einige cm oder einige zehn cm begrenzt, so dass das Mobiltelefon 9 in unmittelbare Nähe der DSRC-OBU 7 gebracht werden muss, um NFC-Funkkommunikationen über die NFC-Funkschnittstelle 8 durchführen zu können.

Für das im weiteren dargestellte Ticketauflade-, -ausstellungs- und -einlöseverfahren werden die genannten Komponenten Zentrale 2, Funkbake(n) 4 und DSRC-OBU(s) 7 des Verkehrstelematiksystems 1 wie folgt mit elektronischen Schlüsselpaaren aus jeweils einem öffentlichen ("public") und einem privaten ("private") Schlüssel eines public/private-Key-Verschlüsselungsverfahrens ausgestattet. Wie in der Technik bekannt, erhält bei public/private-Key-Verschlüsselungsverfahren jeder Teilnehmer zwei Schlüssel, und zwar einen öffentlichen Schlüssel, der allen anderen Teilnehmern bekannt ist, und einen privaten Schlüssel, welchen er geheim hält. Eine Nachricht - wie hier das elektronische Ticket 3 - kann von einem Sender mit Hilfe des öffentlichen Schlüssels des Empfängers verschlüsselt werden und dann nur mehr vom Empfänger mit dessen privatem Schlüssel entschlüsselt werden. Umgekehrt kann eine Nachricht von einem Sender mit seinem privaten Schlüssel signiert werden. Der Empfänger der Nachricht kann diese mit dem öffentlichen Schlüssel des Senders auf Echtheit der Signierung durch den Sender prüfen, d.h. die Signatur des Senders auf diese Weise validieren.

Die Zentrale 2 verfügt dazu über einen öffentlichen Schlüssel PubK.CS und einen privaten Schlüssel PrivK.CS; jede DSRC-OBU 7 über einen öffentlichen Schlüssel PubK.OBU und einen privaten Schlüssel PrivK.OBU; und - zumindest in der ersten Ausführungsform des Verfahrens, in den anderen Ausführungsformen des Verfahrens ist dies nicht zwingend - jede Funkbake 4 über einen öffentlichen Schlüssel PubK.TRX und einen privaten Schlüssel PrivK.TRX. Der öffentliche Schlüssel PubK.TRX der Zentrale 2 wird der Funkbake 4 über einen gesonderten Datenweg 11 zur Verfügung gestellt; oder alternativ jeweils mit einem elektronischen Ticket 3 mitgesandt, wie später noch erläutert, in welchem Fall der Datenweg 11 entfallen kann. Der Datenweg 11 kann beispielsweise das Internet, ein Intranet oder ein Mobilfunknetz sein, oder auch ein physischer Transportweg für einen Datenträger, auf dem der öffentliche Schlüssel PubK.CS von der Zentrale 2 zur Funkbake 4 transportiert wird.

Das in Fig. 1 dargestellte Ticketauflade-, -ausstellungs- und -einlöseverfahren arbeitet wie folgt. Die Ticketaufladung wird vom Benutzer am Mobiltelefon 9 initiiert, wozu er beispielsweise eine entsprechende Applikation auf seinem Smartphone, Tablet-PC usw. bedient oder eine entsprechende SMS-Nachrichten (short message service) auslöst und/oder empfängt (Schritt 12). Für die Anforderung des Tickets 3 von der Zentrale 2 wird dann in einem ersten Schritt 13 der öffentlichen Schlüssel PubK.OBU von der OBU 7 über die Schnittstelle 8 angefordert und empfangen, bevorzugt über NFC. Das Mobiltelefon 9 sendet nun eine Ticketanforderungsnachricht 14, welche auch den öffentlichen Schlüssel PubK.OBU der OBU 7 enthält, über das Mobilfunknetz 10 (und gegebenenfalls weitere zwischenliegende Datennetze) an die Zentrale 2.

In der Zentrale 2 wird ein neues elektronisches Ticket 3 generiert und beispielsweise mit einer eindeutigen Ticketkennung TK, z.B. einer Transaktions-ID oder einem Zeitstempel, versehen. Das ausgestellte Ticket 3 wird nun in der Zentrale 2 mit dem privaten Zentralen-Schlüssel PrivK.CS signiert und mit dem zuvor in der Ticketanforderung 14 empfangenen öffentlichen OBU-Schlüssel PubK.OBU verschlüsselt. Das signierte und verschlüsselte Ticket 3 wird, gegebenenfalls zusammen mit dem öffentlichen Zentralen-Schlüssel Pubk.CS, über das Mobilfunknetz 10 an das Mobiltelefon 9 zurückgesandt (Schritt 18).

Das Mobiltelefon 9 sendet das über die Mobilfunkschnittstelle 10 empfangene, signierte und verschlüsselte Ticket 3 über die Schnittstelle 8, bevorzugt über NFC, an die OBU 7 (Schritt 19). In der OBU 7 wird das signierte und verschlüsselte Ticket 3 mit dem privaten OBU-Schlüssel PrivK.OBU entschlüsselt (Schritt 20). Optional kann das nunmehr entschlüsselte, noch signierte Ticket 3 mit Hilfe des öffentlichen Zentralen-Schlüssels PubK.CS validiert werden, d.h. auf Echtheit der Signatur der Zentrale 2 überprüft werden (Schritt 21). Falls die Überprüfung fehlschlägt, d.h. die Signatur nicht echt und damit das Ticket 3 nicht valid ist, kann das Ticket 3 verworfen und/oder das Verfahren abgebrochen werden.

Anschließend verschlüsselt die OBU 7 das von der Zentrale signierte, entschlüsselte Ticket 3 neuerlich, und zwar diesmal - in der in Fig. 1 gezeigten Ausführungsform - mit dem öffentlichen Funkbaken-Schlüssel PubK.TRX (Schritt 23). Der öffentliche Funkbaken-Schlüssel PubK.TRX kann entweder zu Beginn des Verfahrens an alle OBUs 7 verteilt worden sein, oder die OBU 7 fordert zuvor in einem Schritt 22 den öffentlichen Funkbaken-Schlüssel Pubk.TRX von der Funkbake 4, bei welcher sie das Ticket 3 einlösen möchte, über die DSRC-Funkschnittstelle 6 an. Das neuverschlüsselte Ticket 3 wird anschließend über die DSRC-Schnittstelle 6 an die Funkbake 4 zur Einlösung versandt (Schritt 24).

In der Funkbake 4 wird das empfangene signierte und neuverschlüsselte Ticket 3 mit dem privaten Funkbaken-Schlüssel PrivK.TRX entschlüsselt (Schritt 25), und anschließend wird in Schritt 26 die Echtheit seiner Signatur mit Hilfe des öffentlichen Zentralen-Schlüssels PubK.CS überprüft (validiert): Wenn das Ticket 3 tatsächlich von der Zentrale 2 stammt (Signatur valid), dann wird das Ticket 3 in einem Schritt 27 eingelöst. Wie erörtert kann das Einlösen 27 einen entsprechenden Waren- oder Dienstleistungsbezug, eine Eintritts-, Parkgebühr- oder Mautberechtigung od. dgl. zur Folge haben.

Der öffentlichen Zentralen-Schlüssel PubK.CS kann dabei in allen Übermittlungsschritten 18, 19, 24 jeweils mit dem Ticket 3 mitgeführt werden, oder alternativ einmalig über die Verbindung 11 von der Zentrale 2 zur Funkbake 4 übertragen worden sein.

Es versteht sich, dass zwischen dem Empfangen 19 des signierten und verschlüsselten Tickets 3 vom Mobiltelefon 9 in der OBU 7 und dem Senden 24 des neuverschlüsselten und signierten Tickets 3 von der OBU 7 zur ticketeinlösenden Funkbake 27 geraume Zeit vergehen kann, in welcher das Ticket 3 in der OBU 7 vorliegt und von dieser transportiert wird. In der DSRC-OBU 7 erfolgt dabei die Entschlüsselung (Schritt 20), die (optionale) Validierung 21 und die Neu-Verschlüsselung 23 in einer gesicherten Hard- und/oder Softwareumgebung, beispielsweise in einem kryptographisch und/oder physisch zugangsgesichterten "trusted element" in der OBU 7, bzw. stellt die OBU selbst dieses vertrauenswürdige "trusted element" dar. Das Zentralsystem 2 bzw. die Betreiber des Verkehrstelematiksystems 1 können so darauf vertrauen, dass der Schlüsselwechsel, d.h. die Entschlüsselung und Wieder-Verschlüsselung des Tickets 3, in der OBU 7 korrekt durchgeführt wird. Dadurch werden die Ticketausstellung der Zentrale 2, das Kommunikationsmedium Mobiltelefon 9 und die ticketeinlösende Funkbake 4 in Bezug auf ihre jeweiligen Schlüsselpaare voneinander entkoppelt und brauchen keinerlei andere als die genannten Verbindungen; wenn auch auf den Datenweg 11 verzichtet und der öffentliche Zentralen-Schlüssel PubK.CS mit dem Ticket 3 mittransportiert wird, gibt es insbesondere keine direkte Verbindung zwischen ticketausstellender der Zentrale 2 und ticketeinlösender Funkbake 4.

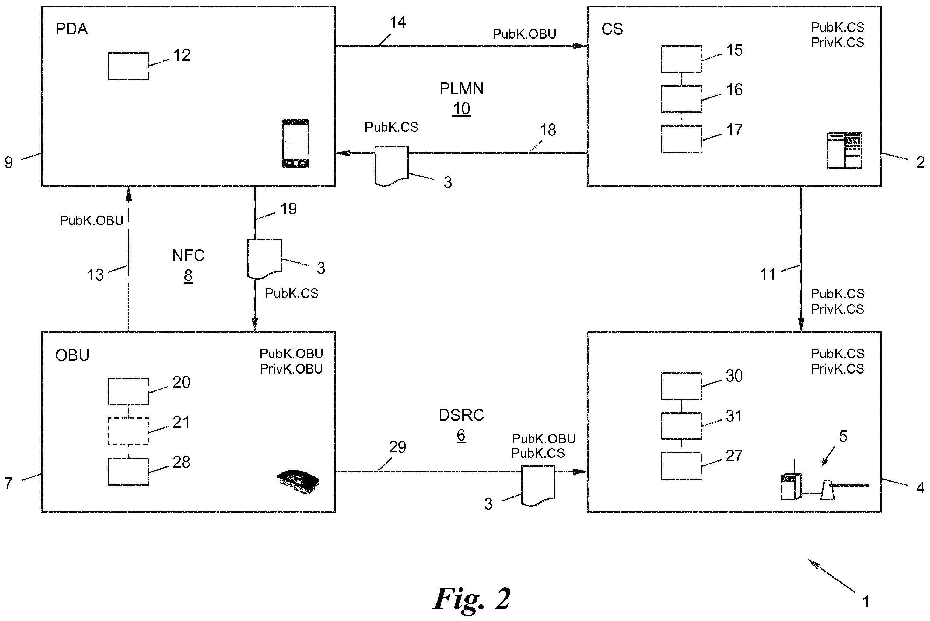

Fig. 2 zeigt eine geringfügig abgewandelte Ausführungsform des Verfahrens von Fig. 1. Die Schritte 12 bis 21 sind gleich wie bei dem Verfahren von Fig. 1. Zum Neuverschlüsseln des Tickets 3 in der OBU 7 wird bei dieser Ausführungsform hingegen nicht der öffentliche Funkbaken-Schlüssel PubK.TRX, sondern der öffentliche Zentralen-Schlüssel PubK.CS verwendet (Schritt 28) und das so signierte und verschlüsselte Ticket 3 über die DSRC-Schnittstelle 6 an die Funkbake 4 gesandt (Schritt 29). In der Funkbake 4 wird das signierte und neuverschlüsselte Ticket 3 nun mit dem privaten Zentralen-Schlüssel PrivK.CS entschlüsselt (Schritt 30), und dann wieder die Signatur des signierten Tickets 3 mit Hilfe des öffentlichen Zentralen-Schlüssels PubK.CS validiert (Schritt 31), bevor die Einlösung (Schritt 27) erfolgt.

Der öffentliche Zentralen-Schlüssel PubK.CS kann hier wieder jeweils mit dem Ticket 3 mittransportiert oder einmal über den Datenweg 11 von der Zentrale 2 an die Funkbake 4 gesandt werden. Darüberhinaus benötigt hier die Funkbake 4 auch Kenntnis über den privaten Zentralen-Schlüssel PrivK.CS, welcher ebenfalls über den Datenweg 11 mitgeteilt werden kann. Da sich der öffentliche und der private Zentralen-Schlüssel PubK.CS, PrivK.CS nur selten oder gar nicht ändern, genügt hier eine seltene oder einmalige Übermittlung über den Datenweg 11.

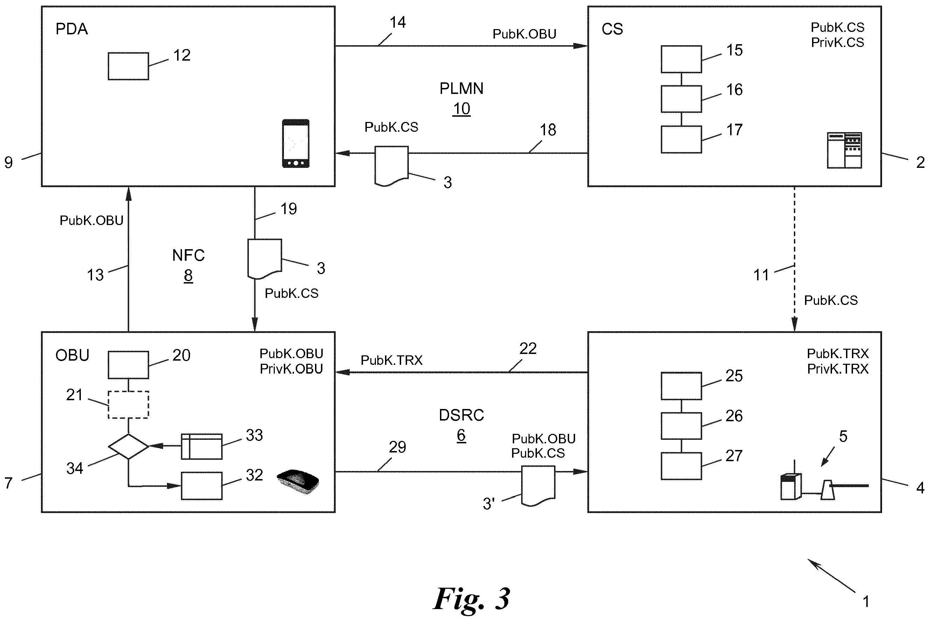

Fig. 3 zeigt eine weitere Verfahrensvariante, bei welcher das Ticket 3 zunächst in eine elektronische Geldbörse 32 in der OBU 7 eingebracht wird. Dieses Einbringen kann beispielsweise in der Aufbuchung eines bestimmten Geldbetrages auf die elektronische Geldbörse 32 bestehen, wobei es sich um einen standardisierten, vorgegebenen Geldwert handeln kann oder einen Geldwert, der im elektronischen Ticket 3 angegeben ist.

Das Verfahren von Fig. 3 läuft in den Schritten 12 bis 21 gleich ab wie in den Fig. 1 und 2, wobei bei der Ticketausstellung 15 in der Zentrale 2 das Ticket 3 jedenfalls mit einer eindeutigen Kennung TK, z.B. einer Transaktions-ID oder einem Zeitstempel, versehen wird. In der OBU 7 ist eine Liste 33 von Ticketkennungen TK bislang erhaltener elektronischer Tickets 3 gespeichert, und jedes neue elektronisches Ticket, das von der Zentrale 2 über das Mobiltelefon 9 und die NFC-Schnittstelle 8 in die DSRC-OBU 7 eingespielt wird (19), wird in einem Schritt 34 hinsichtlich seiner Ticketkennung TK mit der Liste 33 gespeicherter Ticketkennungen gegengeprüft: Wenn die Ticketkennung TK des aktuellen elektronischen Tickets 3 in der Liste 33 vorkommt, dann wurde das elektronische Ticket 3 offensichtlich bereits einmal verwendet, und es wird verworfen bzw. das weitere Verfahren abgebrochen. Wenn es nicht in der Liste 33 enthalten ist, wird es in die elektronische Geldbörse 32 eingebracht und gleichzeitig wird die Ticketkennung TK des aktuellen, gerade eingelösten elektronischen Tickets 3 in der Liste 33 gespeicherter Ticketkennungen eingespeichert. Das elektronische Ticket 3 ist damit "verbraucht".

Die in die elektronische Geldbörse 32 eingebrachten Tickets 3, z.B. in Form eines auf ihrer Basis akkumulierten Guthabenstands der elektronischen Geldbörse 32, können in weiterer Folge dazu verwendet werden, beispielsweise herkömmliche Prepaid-DSRC-Gebührentransaktionen mit einer Funkbake 4 abzuwickeln, um z.B. mittels jeder DSRC-Transaktion über die DSRC-Schittstelle 6 die elektronische Geldbörse 32 zu belasten bzw. fortschreitend davon abzubuchen. Alternativ können in der DSRC-OBU 7 aus dem Guthabensstand bzw. dem/den eingebrachten Ticket(s) 3 der elektronischen Geldbörse 32 ein oder mehrere "neue" elektronische Tickets 3' abgeleitet werden, hier auch als abgeleitete Tickets 3' bezeichnet, die dann gemäß der in den Fig. 1 und 2 geschilderten Verfahrensvarianten (Schritte 24 bis 31) bei einer Funkbake 4 eingelöst werden können. Aus einem eingebrachten Ticket 3 können so über den "Puffer" der elektronischen Geldbörse 32 ein oder mehrere abgeleitete Tickets 3' erzeugt (abgeleitet) werden, oder aus einem oder mehreren eingebrachten Tickets 3 ein abgeleitetes Ticket 3'.

Optional können das Ticket 3, der Kontostand der elektronischen Geldbörse 32 und/oder das bzw. die abgeleiteten Tickets 3' in der OBU 7 mit dem privaten OBU-Schlüssel PrivK.OBU signiert werden, sei es für eine herkömmliche DSRC-Maut- oder -Parkgebührentransaktion oder zur Generierung signierter, abgeleiteter Tickets 3', die gemäß den Schritten 23 bis 31 bei einer Funkbake 4 eingelöst werden; die einlösenden Funkbake 4 kann dann die Echtheit der Tickets 3, 3' anhand des öffentlichen OBU-Schlüssels PubK.OBU validieren.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Aufladen einer Onboard-Unit (7) mit einem elektronischen Ticket (3) und Einlösen desselben oder eines davon abgeleiteten Tickets (3') bei einer Funkbake (4) eines Verkehrstelematiksystems (1), wobei die Onboard-Unit (7) eine DSRC-Schnittstelle (6) zur Funkkommunikation mit der Funkbake (4) und eine von der DSRC-Schnittstelle (6) gesonderte zweite Schnittstelle (8) zur Funkkommunikation mit einem Mobiltelefon (9) hat, umfassend:
Ausstatten der Onboard-Unit (7) mit einem öffentlichen und einem privaten elektronischen Schlüssel (PubK.OBU, PrivK.OBU) der Onboard-Unit (7);
im Mobiltelefon (9), Empfangen (13) des öffentlichen Onboard-Unit-Schlüssels (PubK.OBU) von der Onboard-Unit (7),
im Mobiltelefon (9), Senden (14) einer Ticketanforderung mit dem öffentlichen Onboard-Unit-Schlüssel (PubK.OBU) über ein Mobilfunknetz (10) an eine Zentrale (2);
in der Zentrale (2), Ausstellen (15) des Tickets (3),
in der Zentrale (2), Verschlüsseln (17) des Tickets mit dem öffentlichen Onboard-Unit-Schlüssel (PubK.OBU), und
in der Zentrale (2), Senden (18) des verschlüsselten Tickets (3) an die Onboard-Unit (7) über dessen zweite Schnittstelle (8);
im Mobiltelefon (9), Empfangen eines mit dem öffentlichen Onboard-Unit-Schlüssel (PubK.OBU) verschlüsselten Tickets (3) über das Mobilfunknetz (10) von der Zentrale (2),
im Mobiltelefon (9), Senden des mit dem öffentlichen Onboard-Unit-Schlüssel (PubK.OBU) verschlüsselten Tickets (3) vom Mobiltelefon (9) an die Onboard-Unit (7);
in der Onboard-Unit (7), Empfangen des mit dem öffentlichen Onboard-Unit-Schlüssel (PubK.OBU) verschlüsselten Tickets (3) über die zweite Schnittstelle (8) der Onboard-Unit (7),
in der Onboard-Unit (7), Entschlüsseln (20) des empfangenen Tickets (3) mit dem privaten Onboard-Unit-Schlüssel (PrivK.OBU), und
in der Onboard-Unit (7), Senden (24) des Tickets (3) oder eines davon abgeleiteten Tickets (3') über die DSRC-Schnittstelle (6) an die Funkbake (4) zur Einlösung.

2. Verfahren nach Anspruch 1, **dadurch gekennzeichnet, dass** die zweite Schnittstelle (8) eine drahtlose Schnittstelle ist, bevorzugt eine NFC-Schnittstelle.

3. Verfahren nach Anspruch 1 oder 2, **dadurch gekennzeichnet, dass** die Funkbake (4) mit einem öffentlichen und einem privaten elektronischen Schlüssel (PubK.TRX, PrivK.TRX) der Funkbake (4) ausgestattet wird, und dass in der Onboard-Unit (7) das entschlüsselte Ticket (3) oder das daraus abgeleitete Ticket (3') vor dem Senden an die Funkbake (4) mit dem öffentlichen Funkbaken-Schlüssel (PubK.TRX) neu-verschlüsselt wird (23).

4. Verfahren nach Anspruch 3, **dadurch gekennzeichnet, dass** in der Funkbake (4) das Ticket (3) oder abgeleitete Ticket (3') mit dem privaten Funkbaken-Schlüssel (PrivK.TRX) entschlüsselt wird (25).

5. Verfahren nach Anspruch 1 oder 2, **dadurch gekennzeichnet, dass** die Funkbake (4) mit einem öffentlichen und einem privaten elektronischen Schlüssel (PubK.CS, PrivK.CS) der Zentrale (2) des Verkehrstelematiksystems (1) ausgestattet wird, und dass in der Onboard-Unit (7) das entschlüsselte Ticket (3) oder das daraus abgeleitete Ticket (3') vor dem Senden an die Funkbake (4) mit dem öffentlichen Zentralen-Schlüssel (PubK.CS) neu-verschlüsselt wird (23).

6. Verfahren nach Anspruch 5, **dadurch gekennzeichnet, dass** in der Funkbake (4) das Ticket (3) oder abgeleitete Ticket (3') mit dem privaten Zentralen-Schlüssel (PrivK.CS) entschlüsselt wird (25).

7. Verfahren nach einem der Ansprüche 1 bis 6, ferner umfassend, in der mit einem öffentlichen und einem privaten elektronischen Schlüssel (PubK.CS, PrivK.CS) ausgestatteten Zentrale (2) des Verkehrstelematiksystems (1):
Signieren (16) des Tickets mit dem privaten Zentralen-Schlüssel (PrivK.CS).

8. Verfahren nach Anspruch 7, **dadurch gekennzeichnet, dass** in der Onboard-Unit (7) das Ticket (3) mit Hilfe des öffentlichen Zentralen-Schlüssels (PubK.CS) validiert (21) und nur dann, wenn es valid ist, das Ticket (3) oder daraus abgeleitete Ticket (3') an die Funkbake (4) zur Einlösung gesandt wird (24, 29).

9. Verfahren nach Anspruch 7 oder 8, **dadurch gekennzeichnet, dass** in der Funkbake (4) das Ticket (3) oder daraus abgeleitete Ticket (3') mit Hilfe des öffentlichen Zentralen-Schlüssels (PubK.CS) validiert (26) und nur dann, wenn es valid ist, eingelöst wird.

10. Verfahren nach einem der Ansprüche 7 bis 9, **dadurch gekennzeichnet, dass** der öffentliche Funkbaken- oder Zentralen-Schlüssel (PubK.TRX, PubK.CS) von der Funkbake (4) über die DSRC-Schnittstelle (6) an die Onboard-Unit (7) gesandt wird (22).

11. Verfahren nach einem der Ansprüche 7 bis 10, **dadurch gekennzeichnet, dass** der öffentliche Zentralen-Schlüssel (PubK.CS) jeweils mit dem Ticket (3) bzw. abgeleiteten Ticket (3') mitgesandt wird (18, 19, 24, 29).

12. Verfahren nach einem der Ansprüche 7 bis 11, **dadurch gekennzeichnet, dass** in der Zentrale (2) das Ticket (3) mit einer eindeutigen Kennung (TK) versehen wird, und dass in der Onboard-Unit (7) überprüft wird, ob die Kennung (TK) eines empfangenen Tickets (3) in einer Liste (33) gespeicherter Kennungen (TK) enthalten ist und nur dann, wenn sie nicht enthalten ist, das Ticket (3) oder daraus abgeleitete Ticket (3') zur Einlösung an die Funkbake (4) gesandt wird.

13. Verfahren nach Anspruch 12, **dadurch gekennzeichnet, dass** das Ticket in der Onboard-Unit in eine elektronische Geldbörse (32) der Onboard-Unit (7) eingebracht, wobei bevorzugt dann daraus das abgeleitete Ticket (3') abgeleitet wird.

14. Verfahren nach Anspruch 13, **dadurch gekennzeichnet, dass** in der Onboard-Unit (7) die Signatur des Tickets (3) mit Hilfe des öffentlichen Zentralen-Schlüssels (PubK.CS) validiert wird (21) und nur dann, wenn diese valid ist, das Ticket (3) in die elektronische Geldbörse (32) eingebracht wird.

15. Verfahren nach einem der Ansprüche 12 bis 14, **dadurch gekennzeichnet, dass** die eindeutige Kennung (TK) ein Zeitstempel ist.

## Claims

1. A method for charging an onboard unit (7) with an electronic ticket (3) and redeeming said ticket or a ticket (3') derived therefrom at a radio beacon (4) of a traffic telematics system (1), wherein the onboard unit (7) has a DSRC interface (6) for radio communication with the radio beacon (4) and a second interface (8) for radio communication with a mobile telephone (9), said second interface (8) being separate from the DSRC interface (6), comprising:
providing the onboard unit (7) with a public and a private electronic key (PubK.OBU, PrivK.OBU) of the onboard unit (7);
in the mobile telephone (9), receiving (13) the public onboard unit key (PubK.OBU) from the onboard unit (7),
in the mobile telephone (9), transmitting (14) a ticket request with the public onboard unit key (PubK.OBU) to a central system (2) via the mobile network (10);
in the central system (2), issuing (15) the ticket (3),
in the central system (2), encrypting (17) the ticket using the public onboard unit key (PubK.OBU), and
in the central system (2), transmitting (18) the encrypted ticket (3) to the onboard unit (7) via the second interface (8) thereof;
in the mobile telephone (9), receiving a ticket (3) encrypted with the public onboard unit key (PubK.OBU) via the mobile radio network (10) from the central system (2),
in the mobile telephone (9), sending the ticket (3) encrypted with the public onboard unit key (PubK.OBU) from the mobile telephone (9) to the onboard unit (7);
in the onboard unit (7), receiving via the second interface (8) of the onboard unit (7) the ticket (3) encrypted with the public onboard unit key (PubK.OBU),
in the onboard unit (7), decrypting (20) the received ticket (3) using the private onboard unit key (PrivK.OBU), and
in the onboard unit (7), transmitting (24) the ticket (3) or a ticket (3') derived therefrom via the DSRC interface (6) to the radio beacon (4) for redemption.

2. The method according to Claim 1, **characterised in that** the second interface (8) is a wireless interface, preferably an NFC interface.

3. The method according to Claim 1 or 2, **characterised in that** the radio beacon (4) is equipped with a public and a private electronic key (PubK.TRX, PrivK.TRX) of the radio beacon (4), and **in that** the decrypted ticket (3) or the ticket (3') derived therefrom is re-encrypted (23) in the onboard unit (7) using the public radio beacon key (PubK.TRX) before transmission to the radio beacon (4).

4. The method according to Claim 3, **characterised in that** the ticket (3) or derived ticket (3') is decrypted (25) in the radio beacon (4) using the private radio beacon key (PrivK.TRX).

5. The method according to Claim 1 or 2, **characterised in that** the radio beacon (4) is equipped with a public and a private electronic key (PubK.CS, PrivK.CS) of the central system (2) of the traffic telematics system (1), and **in that** the decrypted ticket (3) or the ticket (3') derived therefrom is re-encrypted (23) in the onboard unit (7) using the public central system key (PubK.CS) before transmission to the radio beacon (4).

6. The method according to Claim 5, **characterised in that** the ticket (3) or derived ticket (3') is decrypted (25) in the radio beacon (4) using the private central system key (PrivK.CS).

7. The method according to one of Claims 1 to 6, further comprising, in the central system (2) of the traffic telematics system (1), the central system being provided with a public and a private electronic key (PubK.CS, PrivK.CS):
signing (16) the ticket using the private central system key (PrivK.CS).

8. The method according to Claim 7, **characterised in that** the ticket (3) is validated (21) in the onboard unit (7) with the aid of the public central system key (PubK.CS), and only then, if it is valid, is the ticket (3) or the ticket (3') derived therefrom transmitted (24, 29) to the radio beacon (4) for redemption.

9. The method according to Claim 7 or 8, **characterised in that** the ticket (3) or the ticket (3') derived therefrom is validated (26) in the radio beacon (4) with the aid of the public central system key (PubK.CS) and is only then redeemed if it is valid.

10. The method according to one of Claims 7 to 9, **characterised in that** the public radio beacon key or public central system key (PubK.TRX, PubK.CS) is transmitted (22) from the radio beacon (4) to the onboard unit (7) via the DSRC interface (6).

11. The method according to one of Claims 7 to 10, **characterised in that** the public central system key (PubK.CS) is transmitted (18, 19, 24, 29) together with the ticket (3) or the derived ticket (3').

12. The method according to one of Claims 7 to 11, **characterised in that** the ticket (3) is provided in the central system (2) with a unique identification (TK), and **in that** it is checked in the onboard unit (7) whether the identification (TK) of a received ticket (3) is contained in a list (33) of stored identifications (TK), and the ticket (3) or the ticket (3') derived therefrom is only then transmitted to the radio beacon (4) for redemption if it is not contained.

13. The method according to Claim 12, **characterised in that** the ticket is introduced in the onboard unit into an electronic purse (32) of the onboard unit (7), and preferably **in that** the derived ticket (3') is derived from the electronic purse.

14. The method according to Claim 13, **characterised in that** the signature of the ticket (3) is validated (21) in the onboard unit (7) with the aid of the public central system key (PubK.CS), and the ticket (3) is only then introduced into the electronic purse (32) if it is valid.

15. The method according to one of Claims 12 to 14, **characterised in that** the unique identification (TK) is a timestamp.

## Revendications

1. Procédé de charge d'une unité embarquée (7) avec un ticket électronique (3) et paiement par celui-ci ou par un ticket dérivé (3') de celui-ci au niveau d'une balise (4) d'un système de télématique routière (1), où l'unité embarquée (7) a une interface DSRC (6) pour la communication radio avec la balise (4) et une deuxième interface (8) séparée de l'interface DSRC (6) pour la communication radio avec un téléphone mobile (9), comprenant :
l'équipement de l'unité embarquée (7) avec une clé électronique publique et une clé électronique privée (PubK.OBU, PrivK.OBU) de l'unité embarquée (7) ;
dans le téléphone mobile (9), la réception (13) de la clé d'unité embarquée publique (PubK.OBU) provenant de l'unité embarquée (7),
dans le téléphone mobile (9), l'émission (14) d'une demande de ticket avec la clé d'unité embarquée publique (PubK.OBU) par l'intermédiaire d'un réseau radio mobile (10) vers un central (2) ;
dans le central (2), la production (15) du ticket (3),
dans le central (2), l'encryptage (17) du ticket avec la clé d'unité embarquée publique (PubK.OBU), et
dans le central (2), la transmission (18) du ticket (3) encrypté vers l'unité embarquée (7) par l'intermédiaire de sa deuxième interface (8) ;
dans le téléphone mobile (9), la réception d'un ticket (3) encrypté avec la clé d'unité embarquée publique (PubK.OBU) par l'intermédiaire du réseau radio mobile (10) à partir du central (2),
dans le téléphone mobile (9), la transmission du ticket (3) encrypté avec la clé d'unité embarquée publique (PubK.OBU) du téléphone mobile (9) vers l'unité embarquée (7) ;
dans l'unité embarquée (7), la réception du ticket (3) encrypté avec la clé d'unité embarquée publique (PubK.OBU) par l'intermédiaire de la deuxième interface (8) de l'unité embarquée (7),
dans l'unité embarquée (7), le décryptage (20) du ticket (3) reçu avec la clé d'unité embarquée privée (PrivK.OBU), et dans l'unité embarquée (7), la transmission (24) du ticket (3) ou d'un ticket dérivé (3') de celui-ci par l'intermédiaire de l'interface DSRC (6) vers la balise (4) pour le paiement.

2. Procédé selon la revendication 1, **caractérisé en ce que** la deuxième interface (8) est une interface sans fil, de préférence une interface NFC.

3. Procédé selon la revendication 1 ou 2, **caractérisé en ce que** la balise (4) est équipée avec une clé électronique publique et une clé électronique privée (PubK.TRX, PrivK.TRX) de la balise (4), et que, dans l'unité embarquée (7), le ticket (3) décrypté ou le ticket qui en est dérivé (3') est une nouvelle fois encrypté (23) avec la clé de balise publique (PubK.TRX) avant la transmission vers la balise (4).

4. Procédé selon la revendication 3, **caractérisé en ce que**, dans la balise (4), le ticket (3) ou le ticket dérivé (3') est décrypté (25) avec la clé de balise privée (PrivK.TRX).

5. Procédé selon la revendication 1 ou 2, **caractérisé en ce que** la balise (4) est équipée avec une clé électronique publique et une clé électronique privée (PubK.CS, PrivK.CS) du central (2) du système de télématique routière (1), et que, dans l'unité embarquée (7), le ticket (3) décrypté ou le ticket qui en est dérivé (3') est une nouvelle fois encrypté (23) avec la clé de central publique (PubK.CS) avant la transmission vers la balise (4).

6. Procédé selon la revendication 5, **caractérisé en ce que**, dans la balise (4), le ticket (3) ou le ticket dérivé (3') est décrypté (25) avec la clé de central privée (PrivK.CS).

7. Procédé selon l'une des revendications 1 à 6, comprenant en outre, dans le central (2) du système de télématique routière (1), le central étant équipé avec une clé électronique publique et une clé électronique privée (PubK.CS, PrivK.CS) :
la signature (16) du ticket avec la clé de central privée (PrivK.CS).

8. Procédé selon la revendication 7, **caractérisé en ce que**, dans l'unité embarquée (7), le ticket (3) est validé (21) à l'aide de la clé de central publique (PubK.CS) et uniquement, lorsqu'il est valide, le ticket (3) ou le ticket qui en est dérivé (3') est envoyé (24, 29) vers la balise (4) pour le paiement.

9. Procédé selon la revendication 7 ou 8, **caractérisé en ce que**, dans la balise (4), le ticket (3) ou le ticket qui en est dérivé (3') est validé (26) à l'aide de la clé de central publique (PubK.CS) et uniquement lorsqu'il est valide, il est utilisé pour le paiement.

10. Procédé selon l'une des revendications 7 à 9, **caractérisé en ce que** la clé de balise publique ou la clé de central publique (PubK.TRX, PubK.CS) est envoyée (22) à partir de la balise (4) vers l'unité embarquée (7) par l'intermédiaire de l'interface DSRC (6).

11. Procédé selon l'une des revendications 7 à 10, **caractérisé en ce que** la clé de central publique (PubK.CS) est chaque fois envoyée conjointement (18, 19, 24, 29) avec le ticket (3), respectivement le ticket dérivé (3').

12. Procédé selon l'une des revendications 7 à 11, **caractérisé en ce que**, dans le central (2), le ticket (3) est muni d'un identifiant (TK) unique et que, dans l'unité embarquée (7), on vérifie si l'identifiant (TK) d'un ticket (3) reçu est contenu dans une liste (33) d'identifiants (TK) enregistrés, et, uniquement s'il n'est pas contenu, le ticket (3) ou le ticket qui en est dérivé (3') est transmis à la balise (4) pour le paiement.

13. Procédé selon la revendication 12, **caractérisé en ce que** le ticket est introduit dans l'unité embarquée dans un porte-monnaie électronique (32) de l'unité embarquée (7), où alors, de préférence, le ticket en étant dérivé (3') est dérivé.

14. Procédé selon la revendication 13, **caractérisé en ce que**, dans l'unité embarquée (7), la signature du ticket (3) est validée (21) à l'aide de la clé de central publique (PublK.CS) et uniquement, lorsque celui-ci est valide, le ticket (3) est introduit dans le porte-monnaie électronique (32).

15. Procédé selon l'une des revendications 12 à 14, **caractérisé en ce que** l'identifiant (TK) unique est une horodatage.
